# EUROPÄISCHE PATENTSCHRIFT

(11) **EP 0 749 104 B1**
(45) Veröffentlichungstag und Bekanntmachung des Hinweises auf die Patenterteilung: **03.11.1999**
(21) Anmeldenummer: 96109244.2
(22) Anmeldetag: 10.06.1996
(51) Int. Cl.: G09F 9/30

(54) **Vorrichtung zur Übertragung des von einer innerhalb eines Gehäuses angeordneten Lichtquelle abgestrahlten Lichtes nach aussen**
Device for transmitting to the outside the light emitted by a light source situated in a housing
Dispositif pour transmettre vers l'extérieur la lumière émise par une source située à l'intérieur d'un boîtier

(30) Priorität: 13.06.1995 DE 9509629 U
(43) Veröffentlichungstag der Anmeldung: 18.12.1996
(73) Patentinhaber: ABB PATENT GmbH, 68309 Mannheim (DE)
(72) Erfinder: Ohnesorg, Andreas, 76684 Östringen-Odenheim (DE)
(74) Vertreter: Rupprecht, Klaus, Dipl.-Ing.

(56) Entgegenhaltungen:
- EP-A- 0 295 502
- EP-A- 0 459 153
- EP-A- 0 579 882
- EP-A- 0 644 373
- DE-A- 4 431 876
- DE-C- 4 412 571
- US-A- 4 917 448

## Beschreibung

Die Erfindung betrifft ein Gehäuse mit wenigstens einer in seinem Inneren angeordneten Lichtquelle, deren abgestrahltes Licht in den Bereich je einer Öffnung in der dem Betrachter zugewandten Gehäusewand mittels je eines Lichtleiters zwischen der Lichtquelle und der Öffnung übertragen wird.

Die Funktionsweise oder der Schaltzustand eines elektrischen oder elektronischen Bauelementes wird häufig mit Lichtsignalen angezeigt, die von innerhalb eines Gehäuses, das beispielsweise auf eine Hutprofiltragschiene aufschnappbar ist und in dem die elektronischen und/oder elektrischen Bauelemente untergebracht sind, befindlichen Lichtquellen abgestrahlt werden. Diese Lichtquellen können gegebenenfalls auf einer Leiterplatte angebracht sein, die in einem Abstand unterhalb der Frontwand des Gehäuses angebracht bzw. befestigt ist. Das Licht, welches von dieser Lichtquelle, die zum Beispiel eine Leuchtiode sein kann, abgestrahlt wird, wird mittels eines Lichtleiters nach außen übertragen. Dieser Lichtleiter ist bei einem bekannten Gehäuse geradlinig ausgebildet und innerhalb des Gehäuses fixiert; besondere Befestigungs- und Halterungselemente sind dabei nicht erforderlich.

Aus der EP 0 459 153 A3 ist ein Gehäuse mit einer in seinem Inneren angeordneten Lichtquelle dargestellt, welches Licht in den Bereich einer Öffnung in der dem Betrachter zugewandten Gehäusewand übertragen wird, und zwar mittels mehrerer Lichtleiter zwischen der Lichtquelle und der Öffnung. Diese Lichtleiter sind als optische Fasern ausgebildet und es wird eine Vielzahl von optischen Fasern verwendet, die sich auf die vielfältigste Weise biegen lassen, so wie es erforderlich ist, sie innerhalb des Gehäuses zu verlegen.

Eine ähnliche Ausgestaltung ist auch aus der US 4 917 448 bekannt.

Die DE 44 31 876 A1 beschreibt eine Abformtraube mit optischen Leitern für Bordanlagen.

Aufgabe der Erfindung ist es, ein Gehäuse der eingangs genannten Art, bei dem ein oder mehrere Lichtleiter mittels einer Halterung an der Frontwand des Deckels fixierbar sind, so weiterzubilden, daß bei Montage und Aufsetzen des Deckels bzw. der Frontwand zum Verschließen des Gehäuses auch der bzw. die Lichtleiter exakt über die Lichtquellen angeordnet werden.

Diese Aufgabe wird erfindungsgemäß gelöst durch die Merkmale des Anspruches 1.

Danach wird der gekrümmt gestaltete Lichtleiter mit dem der Lichtquelle abgewandten Ende in eine in der Öffnung festgehaltene Halterung eingesetzt und ist darin fixiert. Wenn die Lichtquelle eine ebene Oberfläche aufweist, die parallel zur Frontwand ausgerichtet ist, kann in bevorzugter Weise der Lichtleiter etwa S-förmig gebogen sein, so daß das eine Ende direkt und unmittelbar über der Lichtquelle und das andere Ende im Bereich der Frontwand liegt. Die beiden Stirnflächen des Lichtleiters können dabei parallel zueinander verlaufen. Mittels der Rastwarzen wird der Lichtleiter reibschlüssig in seine zugehörige Halterung eingesetzt, und die Fixierung erfolgt dabei deshalb, weil die Außenumhüllende der Rastwarzen einen größeren Durchmesser als der Innendurchmesser der Halterung aufweist.

Wenn zwei oder mehr Lichtquellen vorhanden sind, dann kann gemäß Anspruch 2 die Halterung mehrere Halterungselemente aufweisen, in die die Enden der Lichtleiter eingefügt sind. Die Halterungselemente sind in bevorzugter Weise mittels Stegen miteinander verbunden, so daß eine einstückige Halterung gebildet ist.

Gemäß einer weiteren vorteilhaften Ausgestaltung der Erfindung können an sich gegenüberliegenden Außenflächen der Halterungselemente axial verlaufende Leisten vorgesehen sein.

Zwar ist aus der EP 0 459 153 A2 bekannt, die einzelnen Lichtleiter gekrümmt zu verlegen, wobei der Lichtleiter mit dem das Licht abstrahlenden Ende in eine Ausnehmung einer in der Öffnung festgehaltenen Halterung eingreift und darin reibschlüssig fixiert sind. Da bei der erfindungsgemäßen Ausgestaltung der Lichtleiter jedoch starr ausgebildet ist, wird bei der Montage allein der Frontwand auf das Gehäuse erreicht, daß der schon am Gehäuse fixierte Lichtleiter bzw. die am Gehäuse fixierten Lichtleiter automatisch über die zugehörigen Lichtquellen zu liegen kommen.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Fig. 1: eine Teilschnittansicht eines Gehäuses mit der erfindungsgemäßen Vorrichtung
- Fig. 2 und 3: zwei unterschiedliche Ansichten einer Halterung
- Fig. 4: das Ende des Lichtleiters, das in die Halterung eingefügt werden soll.

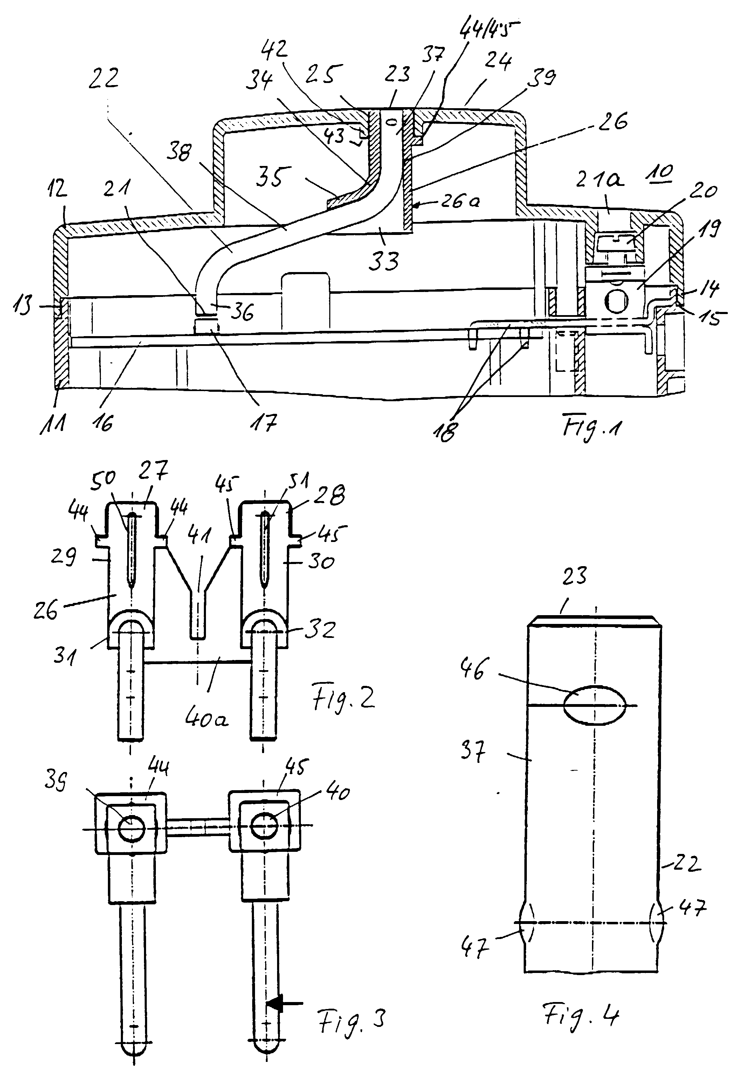

Die Fig. 1 zeigt eine Schnittansicht eines Gehäuses 10, welches ein Gehäuseunterteil oder Sockel 11 und ein als Deckel ausgebildetes Gehäuseoberteil 12 aufweist; der Sockel 11 und das Gehäuseoberteil 12 weisen an ihrer Verbindungsstelle eine umlaufende Stufung 13 auf, der Gestalt, daß das Gehäuseoberteil 12 mit einem umlaufenden Vorsprung 14 den durch die Stufung 13 gebildeten Rücksprung 15 am Gehäuseunterteil 11 umfaßt.

Im Gehäuseunterteil 11 ist eine Leiterplatte 16 befestigt, auf der eine als Leuchtiode ausgebildete Lichtquelle 17 angebracht ist. Die Fig. 1 zeigt lediglich eine Lichtquelle 17; es können auch zwei oder mehr Lichtquellen auf der Leiterplatte 16 befestigt sein. Mittels elektrischer Anschlußelemente 18 ist die Leiterplatte 16 elektrisch mit einer Anschlußklemme 19 verbunden, deren Klemmschraube 20 durch eine Ausnehmung 21a zugänglich ist.

Die Anordnung der Leiterplatte 16 sowie der Anschlußelemente 18 und der Anschlußklemme 19 mit der Klemmschraube 20 ist für die Erfindung nicht von Bedeutung.

Oberhalb der Lichtquelle 17 befindet sich das innere Ende 21 eines S-förmig gebogenen Lichtwellenleiters 22, der aus Plexiglas besteht. Das andere Ende 23 des Lichtwellenleiters verläuft parallel zu dem Ende 21 des Lichtwellenleiters 22 und liegt bündig mit der vorderen Frontwand 24 des Gehäuseoberteils.

Die vordere Frontwand 24 besitzt dabei eine Öffnung 25 (bei mehreren Lichtquellen sind soviele Öffnungen 25 vorhanden, wie es der Anzahl der Lichtquellen 17 entspricht). In diese Öffnung 25 ist eine Halterung 26 eingesetzt, deren Ausgestaltung aus den Fig. 2 und 3 ersichtlich ist. Die Halterung 26 besitzt zwei Halteelemente 27 und 28, die einen dem Querschnittsprofil der Öffnung 25 angepaßten Bereich 29 und 30 aufweisen. Die Öffnung 25 ist bei der Ausführung nach der Fig. 1 quadratisch und demgemäß ist der Querschnitt der Abschnitte 29 und 30 ebenfalls quadratisch. Am entgegengesetzten Ende ist ein Abschnitt 31, 32 angeformt, der eine einseitige Querschnittserweiterung 33 bildet; der Übergang von dem rechteckigen Abschnitt 29, 30 in den Abschnitt 31, 32 mit der Erweiterung 33 erfolgt dadurch, daß die eine, in der Fig. 1 rechts befindliche Außenwand der Halterungselemente 29, 30 senkrecht zur Frontwand 24 geradlinig verläuft, wogegen die gegenüberliegende Wand die maulförmige Erweiterung 33 bildet; sie besitzt einen bogenförmigen Abschnitt 34, an den sich ein geradliniger Abschnitt 35 anschließt; der geradlinige Abschnitt 35 verläuft quer zu der rechts befindlichen Wand 26a und bildet mit dieser ein zur Leiterplatte hin offenes V, dessen Öffnungswinkel stumpf ist. Die Fig. 1 zeigt, daß der Lichtwellenleiter 22 im Bereich seiner Stirnenden 21 und 23 parallel verlaufende Abschnitte 36 und 37 aufweist; diese beiden parallel verlaufenden Abschnitte, die darüber hinaus auch unterschiedliche Länge aufweisen, sind mittels eines schräg dazu verlaufenden Abschnittes 38 miteinander verbunden, wobei der Abschnitt 35 im montierten Zustand parallel zum Abschnitt 38 verläuft. Der Lichtwellenleiter 22 ist kreisförmig im Querschnitt und demgemäß ist die Ausnehmung 39, 40 in den Halterungselementen 29, 30 ebenfalls kreisförmig im Querschnitt, abgesehen von der Erweiterung 33.

Die beiden Halterungselemente 29 und 30 sind mittels eines Steges 40a miteinander verbunden, der einen Schlitz 41 aufweist, der in Richtung der Abschnitte 27 und 28 offen ist.

Die Öffnung 25 ist innerhalb des Gehäuseoberteils 12 von einem Stutzen 42 umgeben, wodurch eine Anschlagfläche 43 gebildet ist, gegen welche seitliche Nasen 44, 45 an den Halterungselementen 29, 30 angelegt werden können, so daß mit den Nasen 44, 45 die Halterungselemente 29, 30 an der Fläche bzw. der Stirnkante 43 festgeklebt werden können.

Die Fig. 4 zeigt den Abschnitt 37 des Lichtwellenleiters 22.

In unterschiedlichen Abständen von der Stirnfläche 23 sind nach außen vorspringende Rastwarzenpaare 46, 47 vorgesehen, wobei die Rastwarzenpaare 46 diametral am Umfang sich gegenüberliegend angeordnet sind; die Verbindungslinien der Warzen der Rastwarzenpaare verlaufen, wie aus der Fig. 4 ersichtlich ist, senkrecht zueinander. Ihre Außenumhüllende ist geringfügig größer als der Durchmesser der Ausnehmungen 39, 40, so daß die Lichtwellenleiter 22 in die entsprechenden Ausnehmungen 39 und 40 hineingedrückt werden müssen und darin dadurch reibschlüssig fixiert sind. Nach dem die Halterung 26 mit den beiden Halterungselementen 29 und 30 und den entsprechenden Lichtwellenleitern 22 miteinander verbunden sind, können sie in die Ausnehmungen 25 des Gehäuseoberteils 12 eingesetzt und darin durch Verkleben fixiert werden, so daß das Gehäuseoberteil 12 zusammen mit den Lichtwellenleitern 22 eine vormontierbare Einheit bildet. Bei der Montage, wenn das Gehäuseoberteil auf das Gehäuseunterteil aufgesetzt wird, sind die Lichtwellenleiter mit ihren innen befindlichen Enden 36 exakt an die entsprechenden Lichtquellen angepaßt.

An den Halterungselementen 27, 28 sind axial verlaufende, vorspringende Leisten 50, 51 vorgesehen, die der reibschlüssigen Halterung der Halterungselemente 27, 28 in den Öffnungen 25 dienen.

## Patentansprüche

1. Gehäuse mit wenigstens einer in seinem Inneren angeordneten Lichtquelle, deren abgestrahltes Licht in den Bereich je einer Öffnung in einer dem Betrachter zugewandten Gehäusewand (24) mit je einem Lichtleiter (22) zwischen der Lichtquelle (17) und der Öffnung (25) übertragen wird, wobei der gekrümmt gestaltete, aus starrem, Material, wie z. B. Plexiglas, bestehende Lichtleiter (22) mit dem das Licht abstrahlenden Ende (23) in eine Ausnehmung (39, 40) einer in der Öffnung (25) festgehaltenen Halterung (26) eingreift und darin fixiert ist sowie an dem in die Ausnehmung der Halterung (26) eingreifenden Ende (23) Rastwarzen (46, 47) aufweist, deren Außenumhüllende einen größeren Durchmesser als die den Lichtleiter (22) aufnehmende Ausnehmung (39, 40) der Halterung (26) aufweist, so daß der Lichtleiter (22) reibschlüssig in der Halterung (26) fixiert ist, wobei die Ausnehmung in von dem das Licht abstrahlenden Ende (23) abgewandter Richtung eine Erweiterung aufweist, die der Biegeform des Lichtleiters (22) angepaßt ist, und wobei die Halterung (26) eine der Anzahl der Lichtleiter (22) entsprechende Anzahl von Ausnehmungen (39, 40) aufweist.

2. Gehäuse nach Anspruch 1, dadurch gekennzeichnet, daß die Halterung (26) eine der Anzahl der Lichtleiter (22) entsprechende Anzahl von Halterungselementen (27, 28) aufweist, die an einem Ende der Form der Öffnung (25) entsprechend, vorzugsweise quadratisch geformt und am anderen Ende mit der Erweiterung versehen sind, und daß die Halterungselemente (27, 28) mittels Stegen (40a) miteinander verbunden sind.

3. Gehäuse nach Anspruch 2, dadurch gekennzeichnet, daß an sich gegenüberliegenden Außenflächen der Halterungselemente (27, 28) axial verlaufende Leisten (50, 51) vorgesehen sind.

## Claims

1. A housing with at least one light source disposed in its interior, with the light emitted by the source being transmitted into the zone of an opening in a housing wall (24) facing the viewer with an optical waveguide (22) between the light source (17) and the opening 25), with the optical waveguide (25), which is provided with a curved arrangement and is made of a rigid material such as plexiglass, engaging with the end (23) emitting the light into a recess (39, 40) of a fixing device (26) held in the opening (25) and is fixed therein and being provided at the end (23) engaging into the recess of the fixing device (26) with snap-in buttons (46, 47) whose outer envelope comprises a larger diameter than the recess (39, 40) of the fixing device (26) receiving the optical waveguide (22), so that the optical waveguide (22) is fixed in a frictionally engaged manner in the fixing device (26), with the recess having an enlargement in the direction averted from end (23) emitting the light, which enlargement is adjusted to the bent shape of the optical waveguide (22), and with the fixing device (26) comprising a number of recesses (39, 40) corresponding to the number of the optical waveguides (22).

2. A housing as claimed in claim 1, characterised in that the fixing device (26) is provided with a number of fixing elements which correspond to the number of the optical waveguides (22) and are formed at the one end according to the shape of the opening (25), preferably with a square arrangement, and at the other end with the enlargement and that the fixing elements (27, 28) are mutually connected by means of bridges (40a).

3. A housing as claimed in claim 2, characterised in that axially extending ridges (50, 51) are provided on mutually opposite sides of the outer surface areas of the fixing elements (27, 28).

## Revendications

1. Boîtier avec, disposée à l'intérieur de celui-ci, au moins une source lumineuse dont la lumière rayonnée est transmise dans la région chaque fois d'une ouverture dans une paroi de boîtier (24) tournée vers l'observateur, à l'aide chaque fois d'un guide de lumière (22) disposé entre la source de lumière (17) et l'ouverture (25), dans lequel le guide de lumière (22) coudé, réalisé en un matériau rigide, par exemple en plexiglas, pénètre avec son extrémité (23) rayonnant la lumière dans un évidement (39, 40) d'une fixation (26) solidaire de l'ouverture (25) et est fixé dans celui-ci, le guide de lumière, à son extrémité (23) qui pénètre dans l'évidement de la fixation (26), étant pourvu de boutons d'encliquetage (46, 47) dont l'enveloppe extérieure présente un diamètre plus grand que l'enveloppe de l'évidement (39, 40) de la fixation (26) recevant le guide de lumière (22), de telle sorte que le guide de lumière (22) soit tenu par frottements dans la fixation (26), dans lequel l'évidement présente, dans la direction opposée à l'extrémité rayonnant la lumière (23), un évasement qui est adapté au coude du guide de lumière (22) et dans lequel la fixation (26) comporte un nombre d'évidements (39, 40) qui correspond au nombre de guides de lumière (22).

2. Boîtier selon la revendication 1, caractérisé par le fait que la fixation (26) comporte un nombre d'éléments de fixation (27, 28) égal au nombre de guides de lumière (22), lesquels éléments de fixation, à une extrémité, ont une conformation de préférence carrée correspondant à la forme de l'ouverture (25) et à l'autre extrémité sont munis de l'évasement et par le fait que les éléments de fixation (27, 28) sont reliés les uns aux autres par des barrettes (40a).

3. Boîtier selon la revendication 2, caractérisé par le fait que des nervures (50, 51) axiales sont prévues sur des surfaces extérieures en vis-à-vis des éléments de fixations (27, 28).
